# EUROPEAN PATENT APPLICATION

(11) **EP 4 517 275 A1**
(43) Date of publication of application: **05.03.2025**
(21) Application number: 24197662.0
(22) Date of filing: 30.08.2024
(51) Int. Cl.: G01F 1/34, G01P 5/00

(54) **FLUID MEASUREMENT APPARATUS**

(30) Priority: 31.08.2023 CN 202311116989
(71) Applicant: Bitobar Technology Co., Ltd., Tieling City, Liaoning Province 112007 (CN)
(72) Inventor: WANG, Zhonghui, Tieling City, Liaoning Province, 112007 (CN); LI, Jihui, Tieling City, Liaoning Province, 112007 (CN); LAN, Qing, Tieling City, Liaoning Province, 112007 (CN); ZHANG, Kelong, Tieling City, Liaoning Province, 112007 (CN); TANG, Lizhuang, Tieling City, Liaoning Province, 112007 (CN); CAI, Xiao, Tieling City, Liaoning Province, 112007 (CN); WANG, Chao, Tieling City, Liaoning Province, 112007 (CN); YAO, Bo, Tieling City, Liaoning Province, 112007 (CN); YANG, Xiu, Tieling City, Liaoning Province, 112007 (CN); LI, Jinming, Tieling City, Liaoning Province, 112007 (CN); ZHAO, Jianping, Tieling City, Liaoning Province, 112007 (CN)
(74) Representative: Dr. Solf & Zapf Patent- und Rechtsanwalts PartG mbB

(57) **Abstract**

The present invention provides a fluid measurement apparatus, including a pressure sensing element and a data processing element. The pressure sensing element is disposed in direct contact with a measured fluid, the pressure sensing element is a sealed element, and includes a first surface and a second surface that are disposed opposite to each other, the measured fluid directly impacts the first surface and the second surface, and pressure values generated when the first surface and the second surface are impacted by the measured fluid are detected. The data processing element is connected to the pressure sensing element, and a flow velocity and/or a flow rate of the measured fluid are/is calculated by using the pressure value detected by the pressure sensing element.The present invention resolves a problem that the fluid measurement apparatus cannot operate normally due to clogging of a pressure tap hole.

## Description

### CROSS REFERENCE TO RELATED APPLICATIONS

**This** application is based on Chinese Patent Application No. 202311116989.8, filed on 31 August, 2023 and entitled "FLUID MEASUREMENT APPARATUS", and claims priority to this Chinese Patent Application, the content of which is incorporated herein by reference in its entirety.

### TECHNICAL FIELD

**The** present invention pertains to the technical field of flowmeters, and in particular, to a fluid measurement apparatus.

### BACKGROUND

Generally, a pressure sensing element of a flowmeter is disposed on an outer side of a fluid pipe. In a process of measuring a fluid, a throttling element is separately disposed. The throttling element is placed in the measured fluid, to lead a part of the measured fluid out of the pipe to both sides of the pressure sensing element, then a pressure difference of the measured fluid is detected by the pressure sensing element, and finally, a flow velocity and a flow rate of the measured fluid are calculated by using the detected pressure difference. However, when the viscosity of the measured fluid is relatively high and there are a large quantity of particles in the measured fluid, it is extremely likely to cause clogging of the throttling element, resulting in that the flowmeter cannot operate normally.

### SUMMARY

A technical problem to be resolved in the present invention lies in that a fluid measurement apparatus is provided, with which a sealed pressure sensing element is directly placed in a measured fluid, so that the use of a throttling element is omitted, and a pressure tap hole does not need to be disposed, thereby resolving a problem that the fluid measurement apparatus cannot operate normally due to clogging of a pressure tap hole.

To resolve at least one of the foregoing technical problems or alleviate the same to some extent, according to an aspect of the present invention, a fluid measurement apparatus is provided, including:
a pressure sensing element and a data processing element.

The pressure sensing element is disposed in direct contact with a measured fluid, the pressure sensing element is a sealed element, and includes a first surface and a second surface that are disposed opposite to each other, the measured fluid directly impacts the first surface and the second surface, and pressure values generated when the first surface and the second surface are impacted by the measured fluid are detected.

The data processing element is connected to the pressure sensing element, and a flow velocity and/or a flow rate of the measured fluid are/is calculated by using the pressure value detected by the pressure sensing element.

In some implementations, the pressure sensing element further includes a body, diaphragms, and a separator.

A sealed first accommodating space is formed inside the body, and the first accommodating space is filled with an insulating medium.

The separator is movably disposed through the first accommodating space to divide the first accommodating space into a first cavity and a second cavity.

The diaphragms are respectively disposed on the first surface and the second surface, and are respectively connected to two opposite surfaces of the separator through connection parts.

In some implementations, the diaphragm is of a hollow structure and forms a second accommodating space, and the connection part includes a first portion and a second portion.

The first portion is connected to the separator, and together with the separator, forms a third accommodating space.

Two ends of the second portion are respectively connected to the diaphragm and the first portion, the second portion is of a hollow structure and forms a fourth accommodating space, and the fourth accommodating space connects the second accommodating space and the third accommodating space.

The second accommodating space, the third accommodating space, and the fourth accommodating space are filled with an insulating medium.

In some implementations, a first included angle is formed between the first surface and a flow direction of the measured fluid, a second included angle is formed between the second surface and the flow direction of the measured fluid, and the first included angle and the second included angle are less than or equal to 90 degrees.

In some implementations, the first included angle and the second included angle are less than 90°, and the first included angle is the same as the second included angle.

In some implementations, the first included angle and the second included angle are less than or equal to 80 degrees and are greater than or equal to 60 degrees.

In some implementations, the first included angle and the second included angle are 70 degrees.

In some implementations, the first included angle and the second included angle are less than 90°, and the first included angle is different from the second included angle.

In some implementations, the first included angle is less than or equal to 80 degrees and is greater than or equal to 60 degrees, and the second included angle is less than or equal to 20 degrees and is greater than 0 degrees.

In some implementations, the first included angle is 70 degrees, and the second included angle is 10 degrees.

In some implementations, the fluid measurement apparatus further includes a tube, and two ends of the tube are respectively connected to the data processing element and the pressure sensing element. A scale and a level gauge are disposed on the tube.

The present invention has obvious advantages and beneficial effects as compared with the conventional technology. With the technical solution described above, the fluid measurement apparatus in the present invention can achieve considerable technical advancement and practicality, and can realize extensive utilization values in the industry. The fluid measurement apparatus has at least the following advantages:

The pressure sensing element of the fluid measurement apparatus in the present invention is directly placed in the measured fluid, to detect a pressure value generated by an impact force of the measured fluid. Compared with the conventional technology, a throttling element that needs to be separately disposed is omitted, and a problem of clogging of the throttling element caused by factors such as high viscosity and a large quantity of particles of the measured fluid is resolved. In addition, only the sealed pressure sensing element is placed in the measured fluid, and there is no other structure such as a pressure tap hole, so that interference to the measured fluid is relatively slight. Measurement is performed through direct contact between the pressure sensing element and the measured fluid, so that precision of fluid measurement can be effectively improved.

The above description is only a summary of the technical solution of the present invention. To help understand the technical means of the present invention more clearly for implementation according to the content of the specification, and to make the above and other objectives, features, and advantages of the present invention clearer and easier to understand, preferred embodiments are especially taken as examples in conjunction with the accompanying drawings, and the detailed descriptions are as follows.

### BRIEF DESCRIPTION OF DRAWINGS

FIG. 1 is a schematic diagram of a structure of a fluid measurement apparatus according to an embodiment of the present invention;
FIG. 2 is a schematic diagram of an application of a fluid measurement apparatus according to an embodiment of the present invention;
FIG. 3 is a schematic diagram of a structure of a pressure sensing element according to an embodiment of the present invention;
FIG. 4 is a schematic diagram of a structure of a pressure sensing element according to another embodiment of the present invention;
FIG. 5 is a schematic diagram of a cross-sectional structure of a pressure sensing element according to an embodiment of the present invention;
FIG. 6 is a schematic diagram of a cross-sectional structure of a pressure sensing element according to another embodiment of the present invention; and
FIG. 7 is a schematic diagram of a cross-sectional structure of a pressure sensing element according to still another embodiment of the present invention.

### [Reference numerals]

10: pressure sensing element
100: body
101: diaphragm
1010: second accommodating space
102: separator
103: first accommodating space
104: first cavity
105: second cavity
106: first surface
107: second surface
108: first included angle
109: second included angle
110: connection part
1100: first portion
1101: second portion
1102: third accommodating space
1103: fourth accommodating space
20: data processing element
30: tube
300: level gauge
40: measured fluid

### DESCRIPTION OF EMBODIMENTS

To further illustrate the technical means to be used to achieve the anticipated objectives of the present invention and their efficacy, specific implementations and efficacy of a fluid measurement apparatus proposed in accordance with the present invention are described below in detail with reference to the accompanying drawings and preferred embodiments.

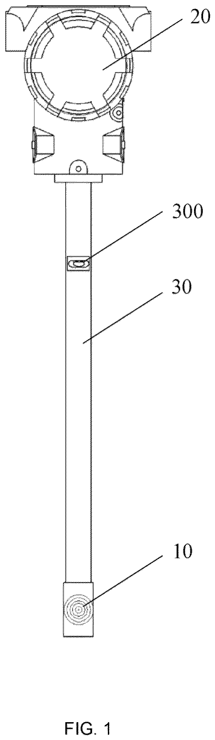

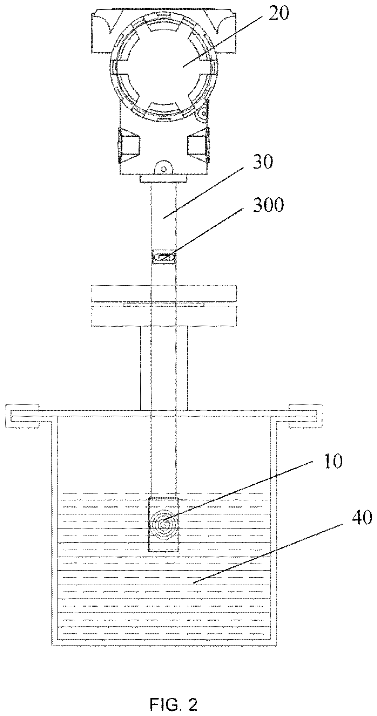

With reference to FIG. 1 and FIG. 2, according to an embodiment of the present invention, a fluid measurement apparatus is provided, including a pressure sensing element 10 and a data processing element 20.

The pressure sensing element 10 is placed in a measured fluid 40, and is disposed in direct contact with the measured fluid 40, so as to detect a pressure value generated by an impact force of the measured fluid 40.

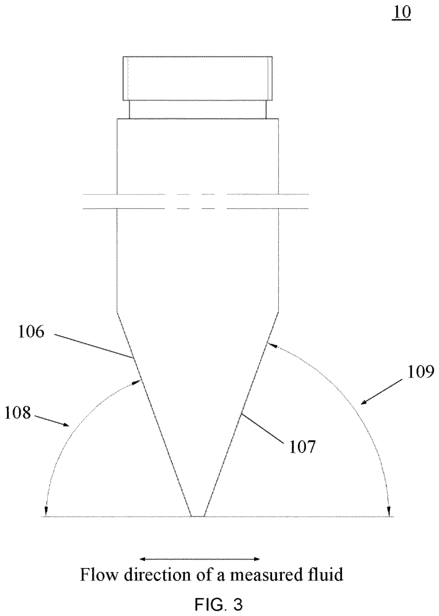

As shown in FIG. 3 to FIG. 7, the pressure sensing element 10 is a sealed element, and the pressure sensing element 10 includes a first surface 106 and a second surface 107 that are disposed opposite to each other along a flow direction of the measured fluid 40. In a detection process, the measured fluid directly impacts the first surface 106 and the second surface 107.

Compared with the conventional technology, the fluid measurement apparatus in the present invention omits a throttling element that needs to be separately disposed, thereby resolving a problem of clogging of the throttling element caused by factors such as high viscosity and a large quantity of particles of the measured fluid. In addition, only the sealed pressure sensing element 10 is placed in the measured fluid 40, and there is no other structure such as a pressure tap hole, so that interference to the measured fluid 40 is relatively slight. Measurement is performed through direct contact between the pressure sensing element 10 and the measured fluid 40, so that precision of fluid measurement can be effectively improved.

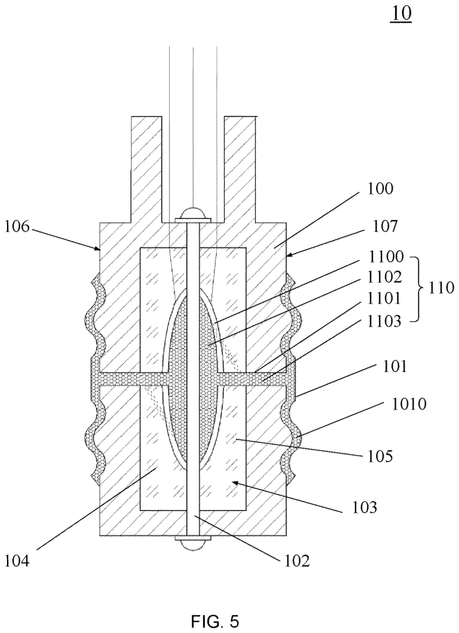

In an embodiment, as shown in FIG. 5 to FIG. 7, the pressure sensing element 10 includes a body 100, diaphragms 101, and a separator 102. A sealed first accommodating space 103 is formed inside the body 100, and the first accommodating space 103 is filled with an insulating medium.

Optionally, the insulating medium filled in the first accommodating space 103 formed in the body 100 is silicone oil. Certainly, the silicone oil is only a specific example, and another insulating medium may alternatively be used. The present invention is not limited thereto.

The separator 102 is movably disposed through the first accommodating space 103 to divide the first accommodating space 103 into a first cavity 104 and a second cavity 105.

The separator 102 divides the first accommodating space 103 of the body 100 into two parts. Both the separator 102 and the body 100 are made of a metal material, and the separator 102 respectively forms two capacitors with two opposite sides of the body 100. When distances between the separator 102 and two opposite sidewalls of the body 100 are changed, Q values of the two capacitors change to form differential capacitances, to calculate, through the differential capacitances, a pressure difference between pressures applied by the measured fluid 40 on the first surface 106 and the second surface 107 of the pressure sensing element 10.

In an embodiment, the separator 102 is made of an elastic material. When forces on both sides of the separator 102 are not uniform, the separator 102 may be deformed in a direction where a small force acts on the separator, causing changes in the distances between the separator 102 and the two opposite sidewalls of the body 100, and further causing changes in the Q values of the two capacitors formed by the separator 102 and the two opposite sidewalls of the body 100.

In another embodiment, the separator 102 is slidably connected to the body 100. When forces on both sides of the separator 102 are not uniform, the separator 102 may slide in a direction where a small force acts on the separator, causing changes in the distances between the separator 102 and the two opposite sidewalls of the body 100, and further causing changes in the Q values of the two capacitors formed by the separator 102 and the two opposite sidewalls of the body 100.

As shown in FIG. 5 to FIG. 7, the diaphragms 101 are respectively disposed on the first surface 106 and the second surface 107 of the pressure sensing element 10, and are respectively connected to two opposite surfaces of the separator 102 through connection parts 110.

In an embodiment, as shown in FIG. 5 to FIG. 7, the diaphragm 101 is disposed as a hollow structure, so that a second accommodating space 1010 is formed inside the diaphragm 101. The connection part 110 includes a first portion 1100 and a second portion 1101. The first portion 1100 is connected to the separator 102, and the first portion 1100, together with the separator 102, forms a third accommodating space 1102. The second portion 1101 is of a hollow structure, so that a fourth accommodating space 1103 is formed inside the second portion 1101. Two ends of the second portion 1101 are respectively connected to the diaphragm 101 and the first portion 1100, and the fourth accommodating space 1103 connects the second accommodating space 1010 and the third accommodating space 1102.

To transfer an impact force of the measured fluid 40 on the diaphragm 101 to the separator 102, an insulating medium is filled in the second accommodating space 1010, the third accommodating space 1102, and the fourth accommodating space 1103. Optionally, the insulating medium is silicone oil. Certainly, the silicone oil is only a specific embodiment, and another insulating medium may alternatively be used. The present invention is not limited thereto.

In this embodiment, when the impact force of the measured fluid 40 acts on the diaphragm 101, the diaphragm 101 is deformed due to a pressure generated by the measured fluid 40, and the insulating medium in the second accommodating space 1010 of the diaphragm 101 flows toward the third accommodating space 1102 through the fourth accommodating space 1103, to transfer the impact force of the measured fluid 40 to the separator 102, so that the distances between the separator 102 and the two opposite sidewalls of the body 100 are changed.

In another embodiment, the diaphragm 101 is made of an elastic material, and two ends of the connection part 110 are respectively connected to the diaphragm and the separator. When the impact force of the measured fluid 40 acts on the diaphragm 101, the diaphragm 101 is deformed due to the impact force of the measured fluid 40. Different pressures applied to the diaphragm 101 may cause different deformation amounts of the diaphragm 101. When the diaphragm 101 is deformed, a pressure is applied to the separator 102 through the connection part 110, so that the distances between the separator 102 and the two opposite sidewalls of the body 100 are changed.

Optionally, the diaphragm 101 may be disposed as a corrugated structure.

Optionally, a material of the diaphragm 101 may be selected based on different measured fluids 40. For example, when the measured fluid 40 includes sulfur, the diaphragm 101 may be made of a stainless steel material. When the measured fluid 40 includes hydrochloric acid, the diaphragm 101 may be made of a Hastelloy alloy. For the diaphragm 101, a film coating process may be further used to cope with different measured fluids 40. For example, when the measured fluid 40 is hydrogen, a surface of the diaphragm 101 may be gold-plated. When the measured fluid 40 contains a large quantity of adherent impurities, the surface of the diaphragm 101 may be coated with polytetrafluoroethylene. When the measured fluid 40 contains a large quantity of solid impurities, a wear-resistant material may be used.

In some embodiments, as shown in FIG. 3 to FIG. 7, a first included angle 108 is formed between the first surface 106 and the flow direction of the measured fluid 40, a second included angle 109 is formed between the second surface 107 and the flow direction of the measured fluid 40, and both the first included angle 108 and the second included angle 109 are less than or equal to 90 degrees. The pressure sensing element 10 detects a difference between the pressures applied by the measured fluid 40 on a total pressure tap surface (namely, the first surface 106) and a static pressure tap surface (namely, the second surface 107) of the pressure sensing element 10. The total pressure tap surface is a pressure tap surface of the pressure sensing element 10 facing the flow direction of the measured fluid 40, and the static pressure tap surface is a pressure tap surface of the pressure sensing element 10 facing away from the flow direction of the measured fluid 40.

In a specific implementation, as shown in FIG. 5, the first included angle 108 formed between the first surface 106 of the pressure sensing element 10 and the flow direction of the measured fluid 40 is 90 degrees, and the second included angle 109 formed between the second surface 107 and the flow direction of the measured fluid 40 is 90 degrees. That is, the opposite first surface 106 and second surface 107 of the pressure sensing element 10 are both perpendicular to the flow direction of the measured fluid 40.

It may be understood that the first included angle 108 and the second included angle 109 may have an error due to a factor such as a production process. Therefore, when there is a slight deviation between the first included angle 108 and the second included angle 109, it should still be considered that both the first surface 106 and the second surface 107 are perpendicular to the flow direction of the measured fluid 40.

In another specific implementation, as shown in FIG. 3, FIG. 4, FIG. 6, and FIG. 7, the first included angle 108 formed between the first surface 106 of the pressure sensing element 10 and the flow direction of the measured fluid 40 is less than 90 degrees, and the second included angle 109 formed between the second surface 107 and the flow direction of the measured fluid 40 is less than 90 degrees. That is, the opposite first surface 106 and second surface 107 of the pressure sensing element 10 each form an acute angle with the flow direction of the measured fluid 40.

In this implementation, the first surface 106 and the second surface 107 of the pressure sensing element 10 are disposed as inclined structures. On the one hand, a vortex formed by the measured fluid 40 at the pressure sensing element 10 can be reduced, and on the other hand, as the first surface 106 and the second surface 107 of the pressure sensing element 10 are disposed as inclined structures, the measured fluid 40 having high viscosity and a large quantity of particles can be prevented from forming attachments on the first surface 106 and the second surface 107, thereby reducing impact of the vortex and the attachments on measurement precision.

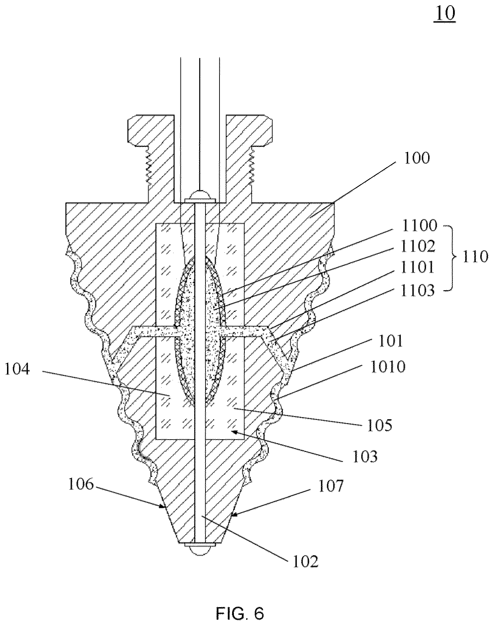

In an embodiment, as shown in FIG. 3 and FIG. 6, the first included angle 108 formed between the first surface 106 of the pressure sensing element 10 and the flow direction of the measured fluid 40 is the same as the second included angle 109 formed between the second surface 107 and the flow direction of the measured fluid 40.

Optionally, both the first included angle 108 formed between the first surface 106 of the pressure sensing element 10 and the flow direction of the measured fluid 40 and the second included angle 109 formed between the second surface 107 and the flow direction of the measured fluid 40 are less than or equal to 80 degrees and are greater than or equal to 60 degrees.

Preferably, the first included angle 108 formed between the first surface 106 of the pressure sensing element 10 and the flow direction of the measured fluid 40 and the second included angle 109 formed between the second surface 107 and the flow direction of the measured fluid 40 are 70 degrees.

It may be understood that the first included angle 108 and the second included angle 109 may have an error due to a factor such as a production process. Therefore, when there is a slight deviation between the first included angle 108 and the second included angle 109, it should still be considered as falling within the protection scope of the present invention.

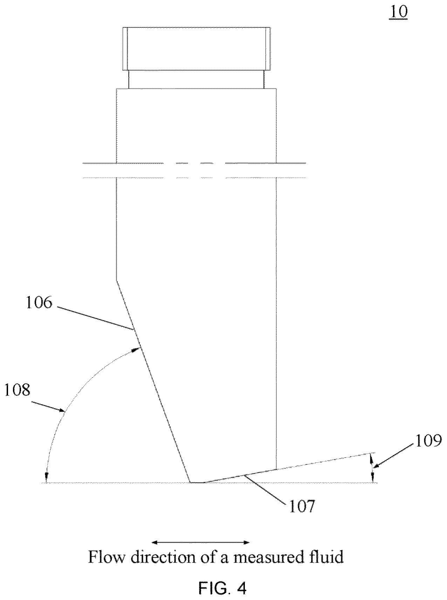

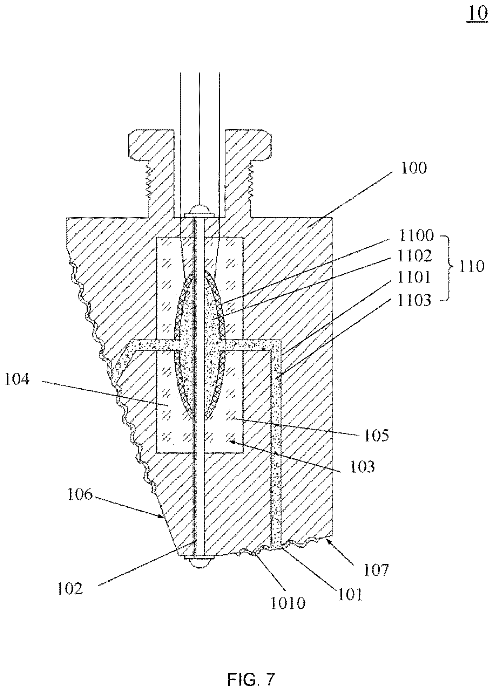

In an embodiment, as shown in FIG. 4 and FIG. 7, the first included angle 108 formed between the first surface 106 of the pressure sensing element 10 and the flow direction of the measured fluid 40 is different from the second included angle 109 formed between the second surface 107 and the flow direction of the measured fluid 40.

Optionally, the first included angle 108 formed between the first surface 106 of the pressure sensing element 10 and the flow direction of the measured fluid 40 is less than or equal to 80 degrees and is greater than or equal to 60 degrees. The second included angle 109 formed between the second surface 107 of the pressure sensing element 10 and the flow direction of the measured fluid 40 is less than or equal to 20 degrees and is greater than 0 degrees.

Preferably, the first included angle 108 formed between the first surface 106 of the pressure sensing element 10 and the flow direction of the measured fluid 40 is 70 degrees. The second included angle 109 formed between the second surface 107 of the pressure sensing element 10 and the flow direction of the measured fluid 40 is 10 degrees.

It may be understood that the first included angle 108 and the second included angle 109 may have an error due to a factor such as a production process. Therefore, when there is a slight deviation between the first included angle 108 and the second included angle 109, it should still be considered as falling within the protection scope of the present invention.

In an embodiment, a temperature sensor (not shown in the figures) is further disposed on the pressure sensing element 10, and is configured to collect a temperature value of the measured fluid 40.

The data processing element 20 is connected to the pressure sensing element 10, and a flow velocity and a flow rate of the measured fluid 40 are calculated by using the pressure value detected by the pressure sensing element 10.

The data processing element 20 may be connected to the pressure sensing element 10 in a wired connection manner, or may be connected to the pressure sensing element 10 in a wireless connection manner, provided that data transmission can be implemented. The present invention is not limited thereto.

The pressure value detected by the pressure sensing element 10 is a pressure difference between the pressures applied by the measured fluid 40 on the total pressure tap surface and the static pressure tap surface of the pressure sensing element 10. The data processing element 20 may calculate the flow velocity and/or the flow rate of the measured fluid 40 based on data such as the pressure difference, the pressures, and a temperature that are collected by the pressure sensing element 10.

Optionally, the data processing element 20 is an integrator.

In an embodiment, when the data processing element 20 is connected to the pressure sensing element 10 in the wired connection manner, the fluid measurement apparatus further includes a tube 30. Two ends of the tube 30 are respectively connected to the pressure sensing element 10 and the data processing element 20, and a connecting wire between the pressure sensing element 10 and the data processing element 20 is disposed through the tube 30.

Optionally, a scale (not shown in the figure) is further disposed on the tube 30, so that a position of the pressure sensing element 10 in the measured fluid 40 can be known through the scale, to facilitate adjustment of the position of the pressure sensing element 10 during installation.

Optionally, as shown in FIG. 1, a level gauge 300 is further disposed on the tube 30, so that an angle between the pressure sensing element 10 and the measured fluid 40 can be known through the level gauge 300, to facilitate adjustment of an angle of the pressure sensing element 10 during installation.

In the present invention, the pressure sensing element is directly placed in the measured fluid, thereby avoiding a case in which the fluid measurement apparatus cannot operate normally due to clogging of the disposed throttling element. The pressure tap surfaces of the pressure sensing element are disposed as inclined structures. On the one hand, a vortex formed by a fluid in the fluid measurement apparatus can be reduced to avoid affecting detection accuracy, and on the other hand, the measured fluid can be prevented from attaching to the pressure tap surfaces to avoid inaccurate measurement.

The above are only preferred embodiments of the present invention and are not intended to limit the present invention in any form. Although the present invention has been disclosed by the preferred embodiments above, the embodiments are not intended to limit the present invention. Any person skilled in the art may make some changes or modifications to implement equivalent embodiments with equivalent changes by using the technical contents disclosed above without departing from the scope of the technical solution of the present invention. Any simple modification, equivalent change and modification made to the foregoing embodiments according to the technical essence of the present invention without departing from the content of the technical solution of the present invention shall still fall within the scope of the technical solution of the present invention.

## Claims

1. A fluid measurement apparatus, comprising: a pressure sensing element (10) and a data processing element (20), wherein
the pressure sensing element (10) is disposed in direct contact with a measured fluid (40), the pressure sensing element (10) is a sealed element, and comprises a first surface (106) and a second surface (107) that are disposed opposite to each other, the measured fluid (40) directly impacts the first surface (106) and the second surface (107), and pressure values generated when the first surface (106) and the second surface (107) are impacted by the measured fluid (40) are detected; and
the data processing element (20) is connected to the pressure sensing element (10), and a flow velocity and/or a flow rate of the measured fluid (40) are/is calculated by using the pressure value detected by the pressure sensing element (10).

2. The fluid measurement apparatus according to claim 1, wherein the pressure sensing element (10) further comprises a body (100), diaphragms (101), and a separator (102);
a sealed first accommodating space (103) is formed inside the body (100), and the first accommodating space (103) is filled with an insulating medium;
the separator (102) is movably disposed through the first accommodating space (103) to divide the first accommodating space (103) into a first cavity (104) and a second cavity (105); and
the diaphragms (101) are respectively disposed on the first surface (106) and the second surface (107), and are respectively connected to two opposite surfaces of the separator (102) through connection parts (110).

3. The fluid measurement apparatus according to claim 2, wherein the diaphragm (101) is of a hollow structure and forms a second accommodating space (1010), and the connection part (110) comprises a first portion (1100) and a second portion (1101), wherein
the first portion (1100) is connected to the separator (102), and together with the separator (102), forms a third accommodating space (1102);
two ends of the second portion (1101) are respectively connected to the diaphragm (101) and the first portion (1100), the second portion (1101) is of a hollow structure and forms a fourth accommodating space (1103), and the fourth accommodating space (1103) connects the second accommodating space (1010) and the third accommodating space (1102); and
the second accommodating space (1010), the third accommodating space (1102), and the fourth accommodating space (1103) are filled with an insulating medium.

4. The fluid measurement apparatus according to any one of claims 1 to 3, wherein a first included angle (108) is formed between the first surface (106) and a flow direction of the measured fluid (40), a second included angle (109) is formed between the second surface (107) and the flow direction of the measured fluid (40), and the first included angle (108) and the second included angle (109) are less than or equal to 90 degrees.

5. The fluid measurement apparatus according to claim 4, wherein the first included angle (108) and the second included angle (109) are less than 90 degrees and the first included angle (108) is the same as the second included angle (109).

6. The fluid measurement apparatus according to claim 5, wherein the first included angle (108) and the second included angle (109) are less than or equal to 80 degrees and are greater than or equal to 60 degrees.

7. The fluid measurement apparatus according to claim 6, wherein the first included angle (108) and the second included angle (109) are 70 degrees.

8. The fluid measurement apparatus according to claim 4, wherein the first included angle (108) and the second included angle (109) are less than 90 degrees, and the first included angle (108) is different from the second included angle (109).

9. The fluid measurement apparatus according to claim 8, wherein the first included angle (108) is less than or equal to 80 degrees and is greater than or equal to 60 degrees, and the second included angle (109) is less than or equal to 20 degrees and is greater than 0 degrees.

10. The fluid measurement apparatus according to claim 9, wherein the first included angle (108) is 70 degrees, and the second included angle (109) is 10 degrees.
